# EUROPEAN PATENT APPLICATION

(11) **EP 4 789 754 A1**
(43) Date of publication of application: **12.08.2026**
(21) Application number: 24898229.0
(22) Date of filing: 29.11.2024
(51) Int. Cl.: B01D 65/10, B01D 65/08, G06F 17/00

(54) **MEMBRANE SEPARATION PROCESS DESIGN SYSTEM FOR MODELING OPTIMAL MEMBRANE SEPARATION PROCESS**

(30) Priority: 01.12.2023 KR 20230172546
(71) Applicant: CJ Cheiljedang Corporation, Seoul 04560 (KR)
(72) Inventor: PARK, Woohyung, Seoul 04560 (KR); PARK, Gwang-Su, Seoul 04560 (KR); JUNG, Jun Young, Seoul 04560 (KR); LEE, Chung Kwon, Seoul 04560 (KR); PARK, Sang Tae, Seoul 04560 (KR); LEE, Yushin, Seoul 04560 (KR); KIM, Jun-Woo, Seoul 04560 (KR); KIM, Kyochan, Seoul 04560 (KR); CHOI, Hoon Seob, Seoul 04560 (KR); HAN, Hyeong Seok, Seoul 04560 (KR)
(74) Representative: Meissner Bolte Partnerschaft mbB
(86) International application number: PCT/KR2024/019348
(87) International publication number: WO 2025/116635

(57) **Abstract**

The present disclosure relates to a membrane separation process design system, and more particularly, to a design system capable of designing an optimal continuous membrane separation process.

## Description

### [Technical Field]

The present disclosure relates to a membrane separation process design system, and more particularly, to a design system capable of designing an optimal continuous membrane separation process.

### [Background Art]

Traditionally, centrifugal separation methods utilizing high gravitational acceleration (g-force) to separate biomass based on density differences have been used. However, in the aforementioned centrifugal separation method, it is difficult to completely separate biomass from fermented liquid, and the centrifugal separation method is a batch-type process that is not capable of continuous treatment of process liquid and thus, it is difficult to apply to production processes requiring rapid treatment of large volumes. Thus, in order to effectively separate biomass, continuous membrane separation processes have been introduced in industry. Continuous membrane separation processes have advantages over centrifugal separation, including higher separation efficiency and lower energy consumption, and the continuous membrane separation processes enable continuous operation and thus are suitable for large-scale production processes.

When biomass is removed from fermented liquid, membrane contamination generation velocity at which biomass accumulates on a membrane surface, depends on the state of fermented liquid and process operation conditions (operating pressure, operating time, dilution factor, etc.). Thus, permeation velocity changes.

In addition, biomass separation efficiency and the state of a final product (i.e., a target product) can be changed depending on the number of membranes and operation conditions.

Meanwhile, since the number of the aforementioned membranes is incorporated into equipment investment cost and operating conditions and cleaning cycle are incorporated into operating cost and calculated, the manufacturing cost of the final product can be derived.

### [Disclosure]

### [Technical Problem]

Accordingly, the present disclosure provides a system for modeling a continuous membrane separation process, and more particularly, a system capable of modeling in consideration of permeation velocity.

In addition, the present disclosure also provides a system capable of modeling a manufacturing cost model that varies according to the number of membranes and operating conditions.

Furthermore, the present disclosure also provides a system capable of modeling in consideration of situations where the permeation velocity of fermented liquid changes.

The problems to be solved by the present disclosure are not limited to the problems mentioned above, and other problems not mentioned will be clearly understood by those skilled in the art from the description below.

### [Technical Solution]

According to an embodiment of the present disclosure, there is provided a method for calculating optimal design conditions for a continuous membrane separation process including a plurality of zones, each zone including one or more skids, the method including: (A) an operation in which a permeation velocity model generation unit generates a permeation velocity model for modeling permeation velocity *J* in each zone;
(B) an operation in which a skid model generation unit generates a skid model for modeling mass balance in each zone by using the permeation velocity model; (C) an operation in which a manufacturing cost model generation unit generates a manufacturing cost model for modeling a manufacturing cost required to manufacture a target product by using the skid model; and (D) an operation in which an optimal condition calculation unit calculates optimal design conditions by using one or more of the permeation velocity model, the skid model, and the manufacturing cost model.

In addition, preferably, the plurality of zones may include a first zone that is a permeate zone, a second zone that is a permeate recycle zone, and a third zone that is a diafiltration zone, and the optimal condition calculation unit may calculate optimal design conditions by varying transmembrane pressure (TMP), a number of skids N_{Z1} arranged in the first zone, a number of skids N_{Z2} arranged in the second zone, a number of skids N_{Z3} arranged in the third zone, and a dilution factor (DF) ratio, and the DF ratio may be a mass ratio of water used in the diafiltration zone relative to fermented liquid.

In addition, preferably, permeation velocity *J* in the first zone may be determined by a volumetric concentration factor (VCF) F_{C} and the TMP, permeation velocity *J* in the second zone and permeation velocity *J* in the third zone may be determined by the VCF F_{C}, the TMP, and a dilution factor F_{D}, and the operation (A) may include: (a1) an operation in which a data collection module of the permeation velocity model generation unit receives experimental results including permeation velocity *J* in the first zone, the VCF F_{C} and the TMP, permeation velocity *J* in the second zone, the VCF F_{C} and the TMP, and permeation velocity *J* in the third zone, the VCF F_{C} and the TMP; and (a2) an operation in which a parameter fitting module of the permeation velocity model generation unit models a permeation velocity model representing a relationship between permeation velocity *J* in the first zone and the VCF F_{C}, a permeation velocity model representing a relationship between permeation velocity *Jᵢ* in the second zone and in the third zone and the VCF F_{C}, and a permeation velocity model representing a relationship between permeation velocity *J* and the dilution factor F_{D}.

In addition, preferably, the operation (B) may include: (b1) an operation in which an initial condition input module of the skid model generation unit receives initial conditions including a volumetric flow rate (*V̇*_{*F*,1}), a target product mass flow rate (*Ṁ*_{*X*,*F*,1}), and a biomass mass flow rate (*Ṁ*_{*S,F*,1}) of a feed for a first skid in the first zone; (b2) an operation in which a mass balance calculation module of the skid model generation unit calculates mass balance in the first zone by using a preset method using the permeation velocity model in the first zone and the initial conditions; (b3) an operation in which the mass balance calculation module of the skid model generation unit calculates mass balance in the second zone by using a preset method using the permeation velocity model in the second zone and the mass balance in the first zone; and (b4) an operation in which the mass balance calculation module of the skid model generation unit calculates mass balance in the third zone by using a preset method using the permeation velocity model in the third zone and the mass balance in the second zone.

In addition, preferably, the operation (C) may include: (c1) an operation in which a fixed cost input module of the manufacturing cost model generation unit receives a fixed cost; (c2) an operation in which a variable cost calculation module of the manufacturing cost model generation unit calculates a target product cost; (c3) an operation in which the variable cost calculation module of the manufacturing cost model generation unit calculates a steam cost; and (c4) an operation in which the manufacturing cost model generation unit generates a manufacturing cost model by using the costs calculated in the operations (c1) through (c3), and the fixed cost may include an installation cost, depreciation, a labor cost, and the variable cost may include a target product cost and a steam cost, and the target product cost may be calculated by a preset method using a feed flow rate of a first skid in the first zone and a flow rate of a last skid in the third zone, and the steam cost may be calculated by a preset method using the DF ratio.

In additon, preferably, the operation (D) may include: (d1) an operation in which an optimal TMP calculation module of the optimal condition calculation unit calculates optimal TMP at which the manufacturing cost is minimum, by using the skid model and the manufacturing cost model; (d2) an operation in which an optimal skid number calculation module of the optimal condition calculatin unit calculates an optimal number of skids at which the manufacturing cost is minimum, by using the skid model and the manufacturing cost model; and (d3) an operation in which an optimal DF ratio calculation module of the optimal condition calculation unit calculates an optimal DF ratio at which the manufacturng cost is minimum, by using the skid model and the manufacturing cost model.

According to another embodiment of the present disclosure, there is provided a system for calculating optimal design conditions of a continuous membrane separation process including a plurality of zones, each zone including one or more skids, the system including: a permeation velocity model generation unit for modeling permeation velocity in each zone; a skid model generation unit for generating a skid model by calculating mass balance of the continuous membrane separation process by using a permeation velocity model modeled by the permeation velocity model generation unit; a manufacturing cost model generation unit for generating a manufacturing cost model by calculating a manufacturing cost required to manufacture a target product by using the skid model; and an optimal condition calculation unit for calculating optimal conditions by using the permeation velocity model, the skid model, and the manufacturing cost model.

In addition, preferably, the plurality of zones may include a first zone that is a permeate zone, a second zone that is a permeate recycle zone, and a third zone that is a diafiltration zone, and the optimal condition calculation unit may calculate optimal design conditions by varying transmembrane pressure (TMP), a number of skids N_{Z1} arranged in the first zone, a number of skids N_{Z2} arranged in the second zone, a number of skids N_{Z3} arranged in the third zone, and a dilution factor (DF) ratio, and the DF ratio may be a mass ratio of water used in the diafiltration zone relative to fermented liquid.

In addition, preferably, permeation velocity *J* in the first zone may be determined by a volumetric concentration factor (VCF) F_{C} and the TMP, and permeation velocity *J* in the second zone and permeation velocity *J* in the third zone may be determined by the VCF F_{C}, the TMP, and a dilution factor F_{D}, and the permeation velocity model generation unit may include: a data collection module that receives experimental results including permeation velocity *J* in the first zone, the VCF F_{C} and the TMP, permeation velocity *J* in the second zone, the VCF F_{C} and the TMP, and permeation velocity *J* in the third zone, the VCF F_{C} and the TMP; and a parameter fitting module that models a permeation velocity model representing a relationship between permeation velocity *J* in the first zone and the VCF F_{C}, a permeation velocity model representing a relationship between permeation velocity *J* in the second zone and in the third zone and the VCF F_{C}, and a permeation velocity model representing a relationship between permeation velocity *J* and the dilution factor F_{D}.

In addition, preferably, the skid model generation unit may include: an initial condition input module that receives initial conditions including a volumetric flow rate (*V̇*_{*F*,1}), a target product mass flow rate (*Ṁ*_{*X*,*F*,1}), and a biomass mass flow rate (*Ṁ*_{*S,F*,1}) of a feed for a first skid in the first zone; and a mass balance calculation module that calculates mass balance in the first zone by using a preset method using the permeation velocity model in the first zone and the initial conditions, calculates mass balance in the second zone by using a preset method using the permeation velocity model in the second zone and the mass balance in the first zone, and calculates mass balance in the third zone by using a preset method using the permeation velocity model in the third zone and the mass balance in the second zone.

In addition, preferably, the manufacturing cost model generation unit may include: a fixed cost input module that receives a fixed cost; and a variable cost calculation module that calculates a target product cost, and the fixed cost may include an installation cost, depreciation, a labor cost, and the variable cost may include a target product cost and a steam cost, and the target product cost may be calculated by a preset method using a feed flow rate of a first skid in the first zone and a flow rate of a last skid in the third zone, and the steam cost may be calculated by a preset method using the DF ratio.

According to another embodiment of the present disclosure, there is provided a system for modeling a continuous membrane separation process, the continuous membrane separation process including a first zone that is a permeate zone and includes N_{Z1} skids, a second zone that is a permeate recycle zone and N_{Z2} skids, and a second zone that is a diafiltration zone and N₂₃ skids, the system calculating mass balance in the first zone, wherein the mass balance in the first zone is calculated by repeatedly calculating a solution to[Equation 1] through [Equation 9] for i (where 1≤i≤N_{Z1}).

In additon, perferably, the system may calculate mass balance in the second zone, wherein the mass balance in the second zone may be calculated by repeatedly calculating a solution to [Equation 4], [Equation 5], and [Equation 10] through [Equation 16] for i (where 1≤i≤N_{Z2}).

In additon, preferably, the system may calculate mass balance in the third zone, wherein the mass balance in the third zone may be calculated by repeatedly calculating a solution to [Equation 4] and [Equation 13] through [Equation 19] for i (where 1≤i≤N_{Z3}).

### [Advantageous Effects]

As described above, according to an embodiment of the present disclosure, since mass balance in each zone is used, the type of fermented liquid, the membrane area, a volumetric concentration factor (VCF) F_{C}, a dilution factor F_{D}, and transmembrane pressure (TMP) can be considered, and a model that closely approximates actual results can be derived.

In addition, since a permeation velocity model, a skid model and a manufacturing cost model modeled by using the same are used, the manufacturing cost of a target product can be more accurately calculated.

Furthermore, since an optimal condition calculation unit calculates the optimal number of skids by varying the weights of the permeation velocity model, situations where the permeation velocity of fermented liquid changes, can be reconfigured.

### [Brief Description of the Drawings]

FIG. 1 is an example of the conceptual diagram of a continuous membrane separation process with a 4-2-2 configuration for treating microbial fermented liquid.
FIG. 2 is a flowchart of a membrane separation process design method according to an embodiment of the present disclosure.
FIG. 3 is a block diagram of a membrane separation process design system according to an embodiment of the present disclosure.
FIG. 4 is a detailed flowchart of a permeation velocity model generation operation according to an embodiment of the present disclosure.
FIG. 5 shows the result of parameter fitting performed by a permeation velocity model generation unit according to an embodiment of the present disclosure.
FIG. 6 is a detailed flowchart of a skid model generation operation according to an embodiment of the present disclosure.
FIG. 7 is a flowchart of a skid model generation unit performing mass balance calculation according to an embodiment of the present disclosure.
FIGS. 8 through 10 are conceptual diagrams for explaining equations shown in FIG. 7.
FIG. 11 is a detailed flowchart of a manufacturing cost model generation operation according to an embodiment of the present disclosure.
FIG. 12 is a detailed flowchart of an optimal design condition calculation operation according to an embodiment of the present disclosure.
FIGS. 13 and 14 are calculation results of an optimal condition calculation unit according to an embodiment of the present disclosure.

### [Detailed Description of Preferred Embodiments]

Hereinafter, some embodiments of the present disclosure will be described in detail with reference to exemplary drawings. When adding reference numerals to components of each drawing, it should be noted that the same components are given the same numerals as much as possible even if they are shown in different drawings. In addition, when describing the present disclosure, if it is determined that a specific description of a related known configuration or function may obscure the gist of the present disclosure, the detailed description thereof will be omitted.

When describing components of embodiments according to the present disclosure, numerals such as first, second, i), ii), a), b, etc. may be used. These numerals are only for distinguishing the component from other components, and the nature, order, or sequence of the component is not limited by the numerals. When a part in the specification is said to "include" or "have" a component, this does not mean that other components may be excluded, but rather that other components may be included, unless explicitly stated otherwise.

In the present disclosure, "permeation velocity" refers to the linear velocity of a solution (fermented liquid) that passes through a skid.

In addition, in the present disclosure, a "skid model" refers to a model including all skids in each zone. Thus, the skid model in the present disclosure should be understood as denoting the configuration of a continuous membrane separation process, not one skid.

Furthermore, in the present disclosure, "initial conditions" includes a volumetric flow rate (*V̇*_{*F*,1}), a target product mass flow rate (*Ṁ*_{*X*,*F*,1}), and a biomass mass flow rate (*Ṁ*_{*S,F*,1}) of a feed for a first skid in zone 1.

Furthermore, in the present disclosure, "optimal" refers to conditions under which the cost used to obtain a target product from fermented liquid including biomass in a continuous membrane separation process is minimized. In the present disclosure, a decision variable determined through optimization is described as transmembrane pressure (TMP), the number of skids in each zone N_{Z1}, N_{Z2}, N_{Z3}, and DF ratio. However, it should be noted that the decision variable may change depending on the circumstances.

### 1. Configuration of Continuous Membrane Separation Process

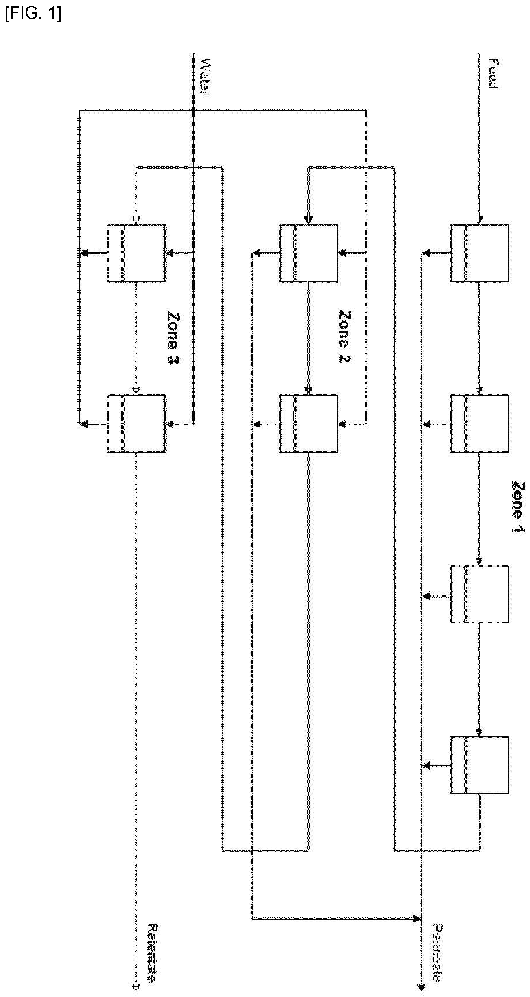

FIG. 1 is an example of the conceptual diagram of a continuous membrane separation process with a 4-2-2 configuration for treating microbial fermented liquid.

The continuous membrane separation process to be modeled by a membrane separation process design system 1 according to an embodiment of the present disclosure will be described with reference to FIG. 1.

The continuous membrane separation process includes zone 1, zone 2, and zone 3.

Zone 1 is commonly referred to as a permeate zone in which a product to be obtained (hereinafter, a "target product") is recovered as permeate and transferred to downstream processes for product manufacturing. In zone 1, biomass is concentrated while being contained in a retentate, and is mixed into the feed for zone 2.

Zone 2 is commonly referred to as a permeate recycle zone in which the feed transferred from zone 1 is mixed with recycle permeate from zone 3serving as a buffer and re-separation is performed. Similarly to the permeate from zone 1, the permeate from zone 2 is transferred to downstream processes for product manufacturing. In addition, the biomass is concentrated while being contained in the retentate, and is mixed into the feed in zone 3.

Zone 3 is commonly referred to as a diafiltration zone in which the feed transferred from zone 2 is mixed with water serving as the buffer, then re-separation is performed and diafiltration is performed. The recycle permeate in zone 3 is recycled to serve as the buffer in zone 2, and the retentate containing the biomass is transferred to downstream processes for processing the biomass.

One or more skids are arranged in one zone. A skid is a structure in which a process apparatus (e.g., membranes) and a frame are combined with each other.

One or more skids are connected in series. When a solution containing solute (biomass, a target product) and solvent is fed as a feed into a skid, the solution is separated by membrane separation into permeate and a retentate. The retentate from one skid becomes the feed for the next skid. In addition, the retentate from one skid is transferred to the next process or becomes the feed for another skid.

In the present disclosure, zone 1 is shown to have four skids, while zones 2 and 3 each have two skids. However, this is merely a simple example, and in the present disclosure, a mathematical modeling method to determine the most economically optimal number of skids to be arranged in each of zones 1, 2, and 3 will be described.

Hereinafter, a method for modeling a membrane separation process formed by a plurality of zones, as disclosed in FIG. 1, in which one or more skids are arranged in each of zones 1, 2, and 3, will be described.

### 2. Description of Membrane Separation Process Design System

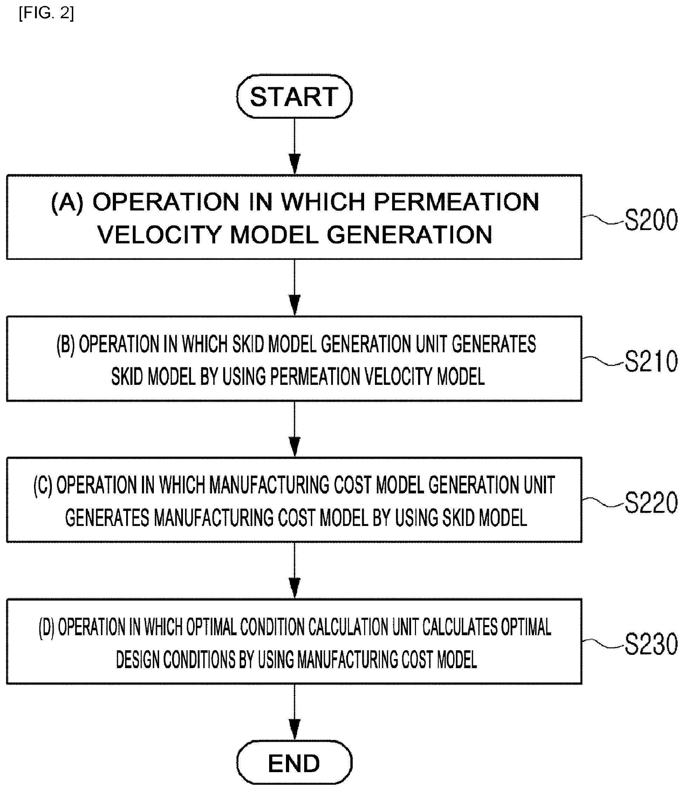

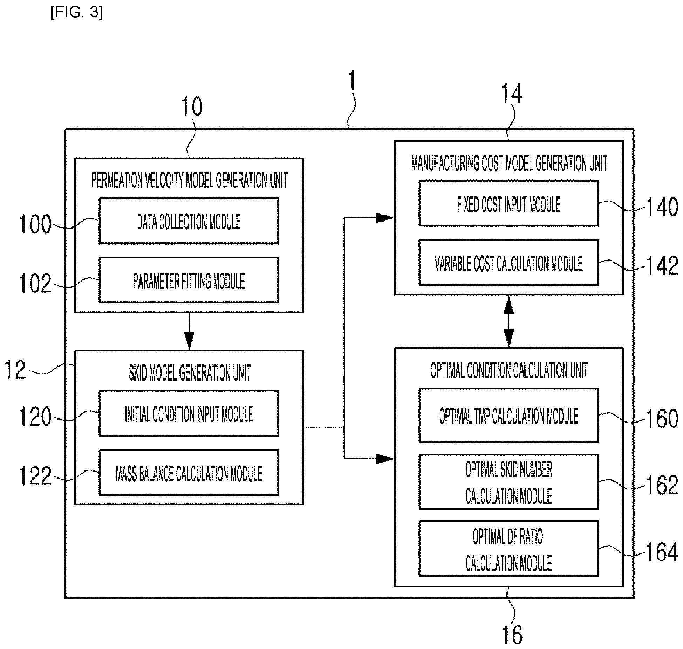

FIG. 2 is a flowchart of a membrane separation process design method according to an embodiment of the present disclosure. FIG. 3 is a block diagram of a membrane separation process design system according to an embodiment of the present disclosure.

Referring to FIGS. 2 and 3, the membrane separation process design system 1 according to an embodiment of the present disclosure may simulate the membrane separation process and may determine a scenario with optimal economic viability by calculating the cost for each scenario.

To this end, the membrane separation process design system 1 according to an embodiment of the present disclosure includes all or part of a permeation velocity model generation unit 10, a skid model generation unit 12, a manufacturing cost model generation unit 14, and an optimal condition calculation unit 16.

The general sequence of membrane separation process design by each part will be described as below.

First, the permeation velocity model generation unit 10 generates a permeation velocity model (S200).

Then, the skid model generation unit 12 generates a skid model by using the permeation velocity model (S210).

Then, the manufacturing cost model generation unit 14 generates a manufacturing cost model by using the skid model (S220).

Finally, the optimal condition calculation unit 16 calculates optimal design conditions by using the manufacturing cost model (S230).

In this case, the optimal condition calculation unit 16 may further use the permeation velocity model and the skid model when calculating the optimal design conditions.

Hereinafter, each part will be described in detail.

### 2.1. Description of Permeation Velocity Model Generation Unit

### (1) Necessity of permeation velocity model generation unit

Membrane separation processes may be described by fluid flow. Thus, when permeation velocity and membrane area in each of zones 1, 2, 3 may be calculated, mass balance in each of zones 1, 2, 3 may be determined. Thus, permeation velocity needs to be modeled. In this case, permeation velocity is linear velocity.

The permeation velocity model generation unit 10 is configured to model permeation velocity (*Jᵢ*) in each of zones 1, 2, 3. Meanwhile, since the permeation velocity (*Jᵢ*) will be modeled differently depending on the type of solution, more specifically, the type of solvent and solute, preferably, the permeation velocity (*Jᵢ*) is modeled in consideration of the permeation velocity (*Jᵢ*) relative to a volumetric concentration factor (VCF) F_{C} indicating the properties of the solvent in the solution and the permeation velocity (*Jᵢ*) relative to a dilution factor F_{D} indicating the properties of the solvent.

### (2) Operation of generating permeation velocity model

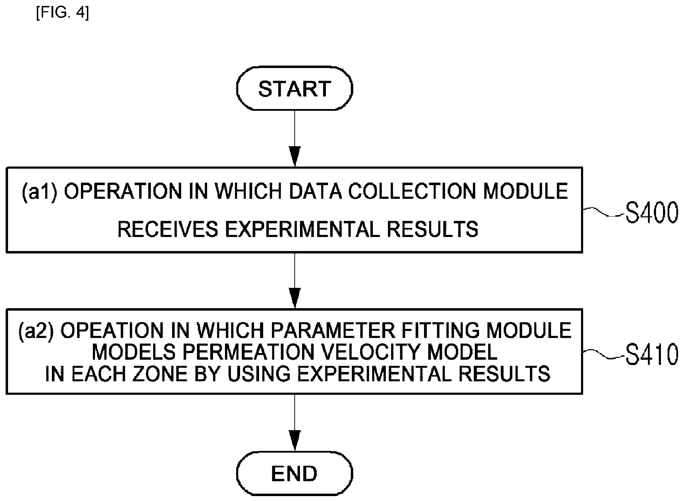

The permeation velocity model generation unit 10 may include a data collection module 100 and a parameter fitting module 102. An operation of generating a permeation velocity model will be described with reference to FIG. 4.

The data collection module 100 receives experimental results (S400).

Subsequently, the parameter fitting module 102 models the permeation velocity model in each of zones 1, 2, 3 by using the received experimental results (S410).

Hereinafter, each module and operations S400 and S410 will be described in more detail.

### (3) Description of data collection module and S400

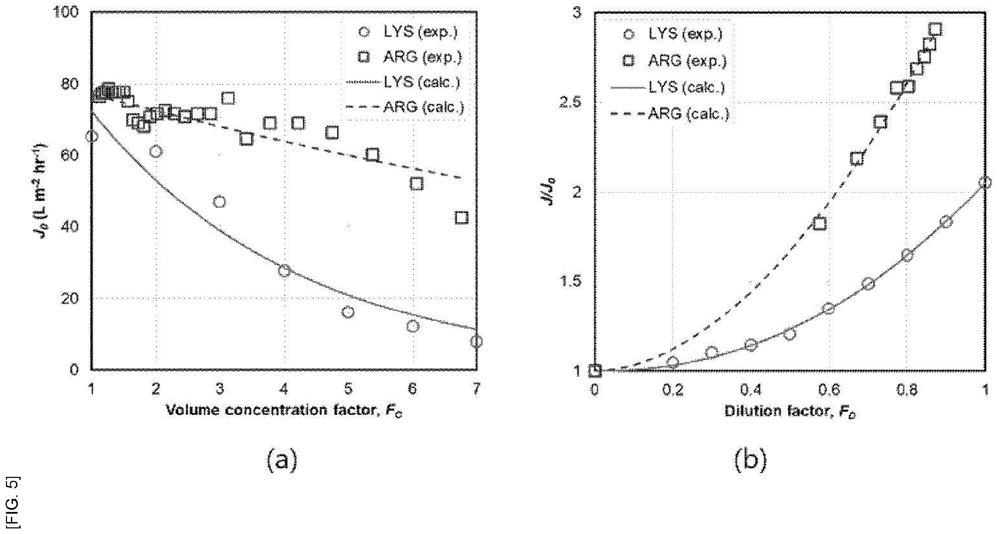

FIG. 5 shows the result of parameter fitting performed by a permeation velocity model generation unit according to an embodiment of the present disclosure. The detailed configuration of the permeation velocity model generation unit 10 will be described with reference to FIGS. 3 through 5.

The permeation velocity (*Jᵢ*) according to the present disclosure is modeled by using a method derived from empirical equations. To this end, the permeation velocity model generation unit 10 may include the data collection module 100 and the parameter fitting module 102.

The data collection module 100 is configured to receive experimental results so as to model the permeation velocity. Meanwhile, experimental conditions according to the present disclosure will be described as below. Here, the experimental conditions include measured values of the permeation velocity, the VCF F_{C}, and transmembrane pressure (TMP) in each of zones 1, 2, 3.
- Target product is lysine or arginine
- Fermented liquid including lysine has a lysine concentration of 200 g/L and a solids content of 2 wt%
- The ceramic membrane used for measuring the permeation velocity of the fermented liquid including lysine is Kerasep BXTM manufactured by Novasep, with a cut-off size of 0.1 µm
- Each membrane has a 7-channel shape with a diameter of 6mm
- The fermented liquid including arginine has an arginine concentration of 120 g/L and a solids content of 2 wt%
- The ceramic membrane used for measuring the permeation velocity of the fermented liquid including arginine is INSIDE CeRAMTM manufactured by Tami, with a cut-off size of 0.25 µm
- Each membrane has a 19-channel shape with a diameter of 3.5 mm
- Initial transmembrane pressure (TMP) was measured within the range of 0.5 bar to 2.0 bar.

### (3) Description of parameter fitting module and S410

The parameter fitting module 102 models a permeation velocity model (*J*) in each zone by using experimental results collected by the data collection module 100.

Meanwhile, the permeation velocity model (*J*) in zone 1 may be expressed as an equation of VCF F_{C}, TMP, and time t, and the permeation velocity model (*J*) in zone 2 and zone 3 may be expressed as an equation of VCF F_{C}, TMP, time t, and dilution factor F_{D}.

In this case, the parameter fitting module 102 is configured to fit parameters other than F_{C} and F_{D}.

### (4) Example of derivation results of permeation velocity model

The experimental results of the permeation velocity model relative to VCF under the above-described conditions are shown in FIG. 3.

Specifically, (a) of FIG. 3shows the change in permeation velocity according to VCF of fermented liquid including lysine and fermented liquid including arginine. Referring to (a) of FIG. 3, it is confirmed that the experimental value (labeled "exp." in (a) of FIG. 3) and a trend line (labeled "calc." in (a) of FIG. 3) are closest when the VCF of the fermented liquid is 3.5.

(b) of FIG. 3 shows the change in relative permeation velocity according to the dilution factor F_{D} when the VCF of both the fermented liquid including lysine and the fermented liquid including arginine is 3.5.

Meanwhile, the equations of the trend lines in (a) of FIG. 3 and (b) of FIG. 3, i.e., mathematical modeling of regression models, are summarized in [Table 1].

In this case, parameters of each regression model are computed by the parameter fitting module 102. Preferably, parameter fitting may be performed by using the least squares method.

**[Table 1]**

| Material | Target | Unit | Permeation Velocity Model |
|---|---|---|---|
| Lysine | Change in permeation velocity according to VCF F_{C} | L·m-2·hr-1 | ${J}_{0} = \frac{72.32}{exp \left(0.3093\left({F}_{C}-1\right)\right)}$ |
| | Change in permeation velocity according to dilution factor F_{D} | - | $\frac{J}{{J}_{0}} = 1 + 1.050 {{F}_{D}}^{2.183}$ |
| Arginine | Change in permeation velocity according to VCF F_{C} | L·m-2·hr-1 | ${J}_{0} = \frac{78.38}{exp \left(0.06835\left({F}_{C}-1\right)\right)}$ |
| | Change in permeation velocity according to dilution factor F_{D} | - | $\frac{J}{{J}_{0}} = 1 + 2.438 {{F}_{D}}^{1.860}$ |

In summary, the permeation velocity model in Table 1 is the result of parameter fitting by using experimental data collected by the permeation velocity model generation unit 10. A skid model may be generated by using the above-described permeation velocity model.

Hereinafter, the skid model will be described.

### 2.2 Description of skid model generation unit

### (1) Necessity of skid model generation unit

Once permeation velocity models for each skid have been modeled by the permeation velocity model generation unit 10, mass balance within the skids may be modeled by using the permeation velocity models. Meanwhile, since the manufacturing cost may be determined by knowing the number of skids in each zone, the number of skids in each zone needs to be modeled.

The skid model generation unit 12 is configured to calculate the number of skids in each of zones 1, 2, 3 by using the permeation velocity model modeled by the permeation velocity model generation unit 10. In this case, modeling is possible by using mass balance between skids within each zone (zones 1, 2, 3) and mass balance relationship between zones 1, 2, 3. Meanwhile, a process of calculating the mass balance includes a process of computing numerical solutions for a plurality of equations.

### (2) Operation of generating skid model

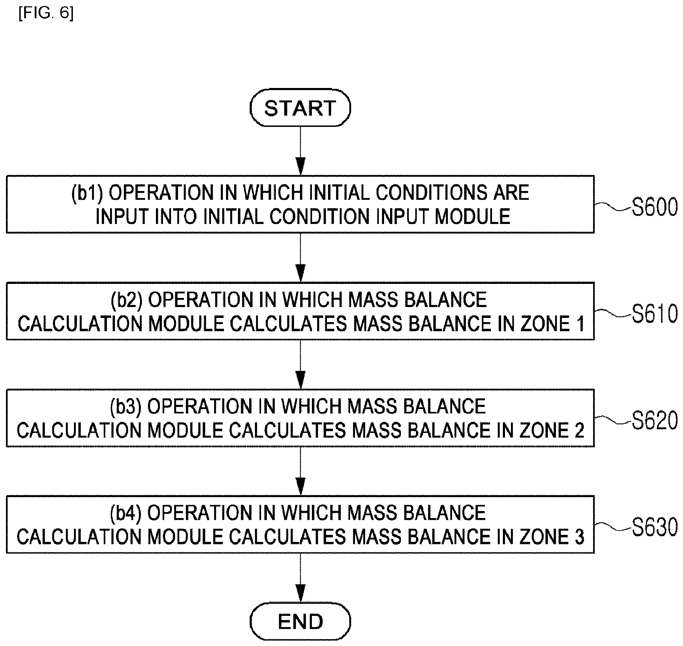

The skid model generation unit 12 may include an initial condition input module 120 and a mass balance calculation module 122. The operation of generating a skid model will be described with reference to FIG. 6.

Initial conditions are input into the initial condition input module 120 (S600). In this case, the initial conditions may include the volumetric flow rate (*V̇*_{*F*,1}), the target product mass flow rate (*Ṁ*_{*X*,*F*,1}), and the biomass mass flow rate (*Ṁ*_{*S,F*,1}) for the feed to a first skid in a first zone.

Subsequently, the mass balance calculation module 122 calculates the mass balance for zone 1 (S610).

In addition, the mass balance calculation module 122 calculates the mass balance for zone 2 (S620).

Furthermore, the mass balance calculation module 122 calculates the mass balance for zone 3 (S630).

Hereinafter, each module and operations S600 through S630 will be described in more detail.

### (3) Description of initial condition input module and S600

As described above, the skid modeling process may be performed through mass balance calculation, and the above-described mass balance calculation may be performed by obtaining numerical solutions of a plurality of equations. Thus, input of initial conditions is required.

The initial condition input module 120 is configured to receive the above-described initial conditions.

### (4) Description of mass balance calculation module

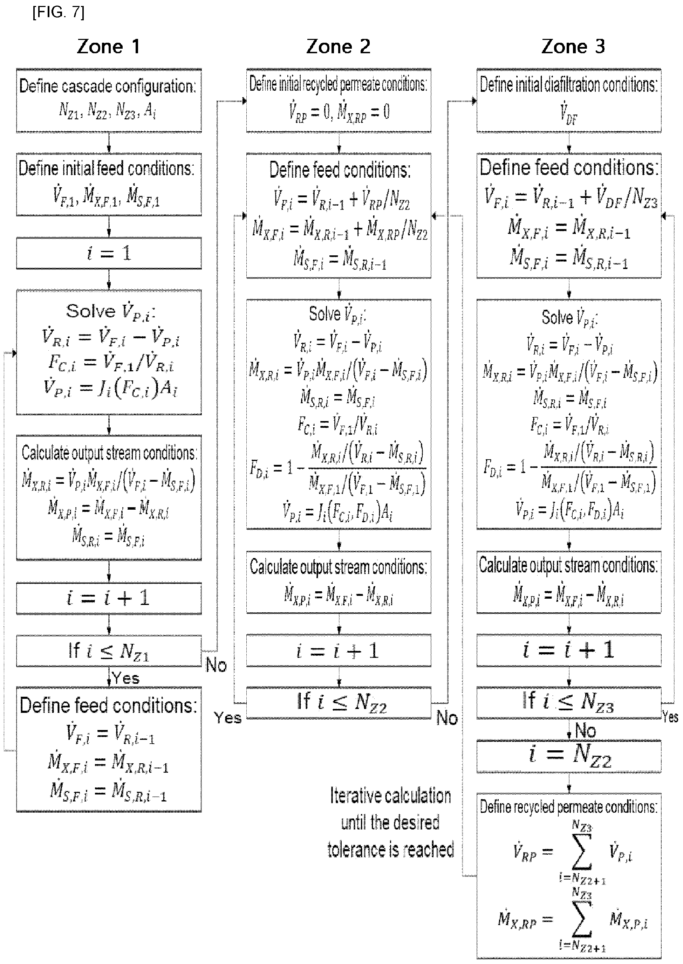

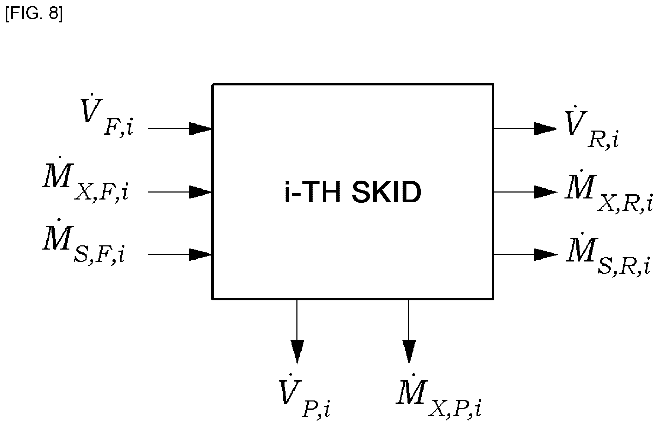

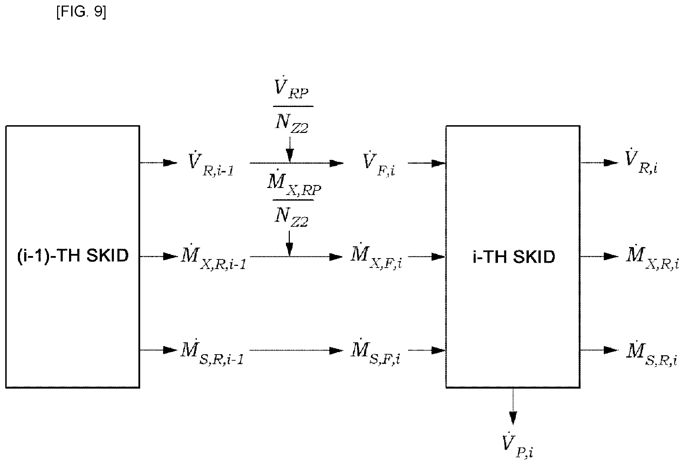

FIG. 7 is a flowchart of a skid model generation unit performing mass balance calculation according to an embodiment of the present disclosure. FIGS. 8 through 10 are conceptual diagrams for explaining equations shown in FIG. 7.

A method by which the mass balance calculation module 122 calculates the mass balance, will be described by using FIGS. 7 through 10.

### (5) Description of mass balance calculation method in zone 1 (S610)

First, a method for calculating the mass balance in zone 1 will be described with reference to FIGS. 7 and 8.

To calculate the mass balance, the number of skids N_{Z1}, N_{Z2}, N_{Z3} within each of zones 1, 2, 3 and the membrane area Aᵢ of the skids should be defined. In addition, the volumetric flow rate (*V̇*_{*F*,1}), the target product mass flow rate (*Ṁ*_{*X*,*F*,1}), and the biomass mass flow rate (*Ṁ*_{*S,F*,1}) for an initial feed (i.e., the feed to a first skid in zone 1) should be defined. Meanwhile, in the present disclosure, the volumetric flow rate, the target product mass flow rate, and the biomass mass flow rate are collectively referred to as 'flow rate'.

The above-described number, membrane area, volumetric flow rate, and mass flow rate are input into the initial condition input module 120.

The feed flow rate for the first skid in zone 1, i.e., a permeate zone, is set to the initial condition (*V̇*_{*F*,1},*Ṁ*_{*X,F*,1},*Ṁ*_{*S,F*,1}) input into the initial condition input module 120. Meanwhile, the feed flow rate for a second skid through N_{Z1}-th skid is identical to the retentate of the preceding skid, and satisfies [Equation 1] through [Equation 3]. Meanwhile, the subscript i denotes the i-th skid.${\dot{V}}_{F , i} = {\dot{V}}_{R , i - 1}$${\dot{M}}_{X , F , i} = {\dot{M}}_{X , R , i - 1}$${\dot{M}}_{S , F , i} = {\dot{M}}_{S , R , i - 1}$

In this case, in zone 1, the volumetric flow rate *V̇_{P,i}* of permeate for an i-th skid is identical to a value obtained by subtracting the volumetric flow rate *V̇*_{*R*,i} of the retentate for the i-th skid from the volumetric flow rate *V̇_{F,i}* of the feed for the i-th skid (see [Equation 4]). In addition, the VCF F_{C} may be determined as the ratio of the volumetric flow rate *V̇_{P,i}* of permeate relative to the volumetric flow rate *V̇_{R,i}* of the retentate by using the mass balance (see [Equation 5]). And, *F_{C,i}* affects the permeation velocity *Jᵢ* of the feed, and the volumetric flow rate *V̇_{P,i}* of the permeate may be calculated by multiplying the area Aᵢ of the skid by the permeation velocity (see [Equation 6]). ${\dot{V}}_{P , i} = {\dot{V}}_{F , i} - {\dot{V}}_{R , i}$ ${F}_{C , i} = {\dot{V}}_{F , i} / {\dot{V}}_{R , i}$ ${\dot{V}}_{P , i} = {J}_{i} \left({F}_{C , i}\right) \times {A}_{i}$

In other words, *V̇_{P,i}* at which the volumertic flow rate *V̇_{P,i}* of the permeate calculated by the mass balance and the volumetric flow rate *V̇_{P,i}* calculated by the permeation velocity become equal, is obtained. To this end, in the present disclosure, the solution is calculated by using the Nelder-Mead method. Subsequently, the target product mass flow rate *Ṁ_{X,R,i}* in the retentate, the target product mass flow rate in the permeate, and the solids mass flow rate *Ṁ_{S,R,i}* in the retentate for each skid may be calculated by the mass balance equation (see [Equation 7] through [Equation 9]).${\dot{M}}_{X , R , i} = {\dot{V}}_{P , i} {\dot{M}}_{X , F , i} / \left({\dot{V}}_{F , i}-{\dot{M}}_{S , F , i}\right)$ ${\dot{M}}_{X , P , i} = {\dot{M}}_{X , F , i} - {\dot{M}}_{X , R , i}$ ${\dot{M}}_{S , R , i} = {\dot{M}}_{S , F , i}$

Thus, when the feed for the first skid is defined as an initial feed and the feed to an i-th skid (where 2≤i≤N_{Z1}) is defined as a retentate of an (i-1)-th skid and then a process of obtaining solutions of [Equation 1] through [Equation 9] is repeatedly performed until i becomes N_{Z1}, total mass balance in zone 1 may be calculated.

### (6) Description of mass balance calculation method in zone 2 (S620)

A method for calculating mass balance in zone 2 will be described with reference to FIGS. 7 through 9.

The volumetric flow rate *V̇_{F,i}* of the feed for the i-th skid in zone 2, i.e., a permeate recycle zone may be considered as mixing of the volumetric flow rate *V̇*_{*R,i*-1} of the retentate for the (i-1)-th skid and the volumetric flow rate of recycle permeate in zone 3 divided by N_{z2} (see [Equation 10]).

In addition, the target product mass flow rate *Ṁ_{X,F,i}* and the biomass mass flow rate *Ṁ_{S,F,i}* that are present in the feed for the i-th skid may be calculated by using [Equation 11] through [Equation 12]. *V̇_{F,i}*, *Ṁ_{X,F,i}*, and *Ṁ_{S,F,i}* to be substituted into [Equation 10] through [Equation 12] may be derived from a final volumetric flow rate and a mass flow rate in zone 1. ${\dot{V}}_{F , i} = {\dot{V}}_{R , i - 1} + {\dot{V}}_{RP} / {N}_{Z 2}$${\dot{M}}_{X , F , i} = {\dot{M}}_{X , R , i - 1} + {\dot{M}}_{X , RP} / {N}_{Z 2}$ ${\dot{M}}_{S , F , i} = {\dot{M}}_{S , R , i - 1}$

The permeate volumetric flow rate *V̇_{P,i}* for the i-th skid in zone 2 is identical to a value obtained by subtracting the volumetric flow rate *V̇_{R,i}* of the retentate for the i-th skid from the volumetric flow rate *V̇_{F,i}* of the feed for the i-th skid (see [Equation 4]). In addition, the VCF F_{C,*i*} may be determined by using the mass balance in zone 2 (see [Equation 5]).

Meanwhile, unlike in zone 1, the permeation velocity *Jᵢ* of permeate in zone 2 is affected by both the VCF and the dilution factor F_{D}. Since, in zone 2, a part of the permeate in zone 3 is injected as a buffer, it is natural to consider the dilution factor (see [Equation 13] through [Equation 15]).

The volumetric flow rate *V̇_{P,i}* for the i-th skid in zone 2 is calculated as a value obtained by multiplying the permeation velocity *Jᵢ* of permeate by the area Aᵢ of the skid (see [Equation 16]). ${\dot{M}}_{X , P , i} = {\dot{V}}_{P , i} {\dot{M}}_{X , F , i} / \left({\dot{V}}_{F , i}-{\dot{M}}_{S , F , i}\right)$ ${\dot{M}}_{S , R , i} = {\dot{M}}_{S , F , i}$ ${F}_{D , i} = 1 - \frac{{\dot{M}}_{X , R , i} / \left({\dot{V}}_{R , i}-{\dot{M}}_{S , R , i}\right)}{{\dot{M}}_{X , F , 1} / \left({\dot{V}}_{F , 1}-{\dot{M}}_{S , F , 1}\right)}$ ${\dot{V}}_{P , i} = {J}_{i} \left({F}_{C , i}, {F}_{D , i}\right) \times {A}_{i}$

When solutions satisfying [Equation 4], [Equation 5] and [Equation 13] through [Equation 16] are found, the volumetric flow rate *V̇_{P,i}* of permeate may be known.

When a process of obtaining the solution of mass balance of the i-th skid (where 2≤i≤N_{z2}) within zone 2 is repeatedly performed by using the above-described method, total mass balance in zone 2 may be calculated.

### (7) Description of mass balance calculation method in zone 3 (S630)

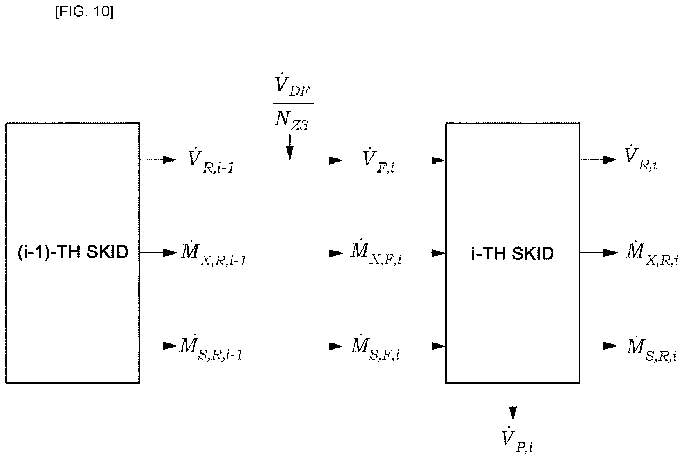

A method for calculating mass balance in zone 3 will be described with reference to FIGS. 7 and 10.

The volumetric flow rate *V̇_{F,i}* of the feed for the i-th skid in zone 3, i.e., a diafiltration zone may be considered as mixing of the volumetric flow rate *V̇*_{*R,i*-1} of the retentate for the (i-1)-th skid and the volumetric flow rate *V̇_{DF}*/*N_{Z3}* of a diafiltration buffer (water) in zone 3 divided by N_{z3} (see [Equation 17]).

In addition, the target product mass flow rate *J* and the biomass mass flow rate *Ṁ_{S,F,i}* that are present in the feed for the i-th skid may be calculated by using [Equation 18] through [Equation 19]. *V̇_{F,i}*, *Ṁ_{X,F,i}*, and *Ṁ_{S,F,i}* to be substituted into [Equation 17] through [Equation 19] may be derived from a final volumetric flow rate and a mass flow rate in zone 2. ${\dot{V}}_{F , i} = {\dot{V}}_{R , i - 1} + {\dot{V}}_{DF} / {N}_{Z 3}$ ${\dot{M}}_{X , F , i} = {\dot{M}}_{X , R , i - 1}$ ${\dot{M}}_{S , F , i} = {\dot{M}}_{S , R , i - 1}$

The permeate volumetric flow rate *V̇_{P,i}* for the i-th skid in zone 3, like in zone 2, may be determined by obtaining a solution satisfying both [Equation 4] for mass balance and [Equation 13] through [Equation 16] for mass balance by permeation velocity *Jᵢ*.

Thus, recycle permeate (*V̇_{RP}*,*Ṁ_{X,RP}*) mixed in the feed in zone 2 may be newly defined as total permeate in zone 3.

When calculation processes for zone 2 and zone 3 are repeatedly performed under the newly-defined recycle permeate condition, the value of the volumetric flow rate *V̇_{RP}* of the recycle permeate converges to a certain value.

In the present disclosure, preferably, the process is repeated until the volumetric flow rate *V̇_{RP}* of the recycle permeate is within an allowable error range of 0.1%.

The mass balance in the above-described zone 1 through zone 3 is repeatedly calculated so that flow rates converge to a certain value, and the flow of a fluid in the arrangement and configuration of a skid to be obtained is modeled.

As described above, the skid configuration and arrangement is modeled by using the mass balance in each of zones 1, 2, 3, so that the type of fermented liquid (more specifically, the type of a target product), a membrane area, a VCF F_{C}, a dilution factor F_{D}, and TMP may be considered, and modeling that approximates actual results may be derived.

### 2.3. Description of manufacturing cost model generation unit

### (1) Operation of generating manufacturing cost model

The manufacturing cost model generation unit 14 is configured to calculate manufacturing cost by using the skid model generated by the skid model generation unit 12.

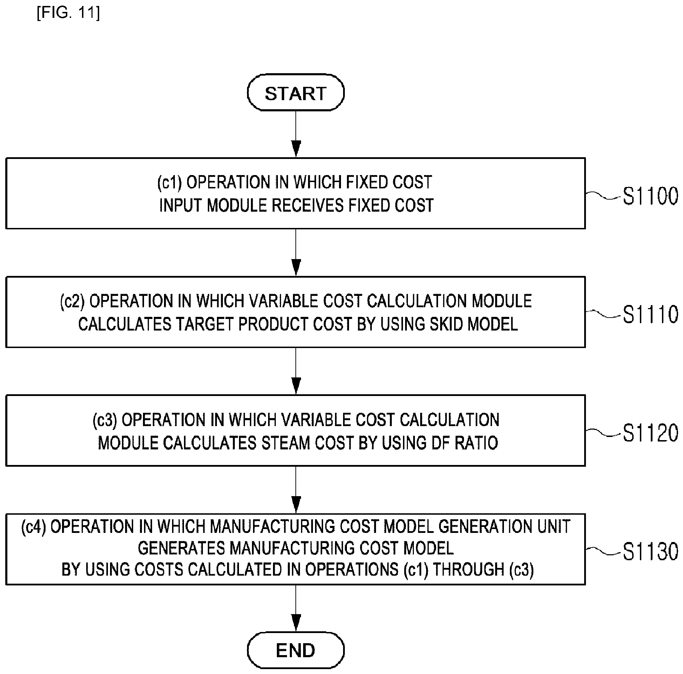

The manufacturing cost model generation unit 14 may include a fixed cost input module 140 and a variable cost calculation module 142 (see FIG. 3). An operation of generating a manufacturing cost model will be described with reference to FIG. 11.

A fixed cost is input into the fixed cost input module 140 (S1100).

The variable cost calculation module 142 calculates a target product cost by using the skid model (S1110).

The variable cost calculation module 142 calculates a steam cost by using the skid model and a DF ratio (S1120).

The manufacturing cost model generation unit generates a manufacturing cost model by adding up costs calculated by operations S1100 through S1120 (S1130).

Hereinafter, each module and operations S1100 through S1130 will be described in more detail.

### (2) Description of fixed cost input module and S1100

The fixed cost input module 140 is configured to receive a fixed cost. The fixed cost may include an installation cost, depreciation, a labor cost, and other expenses. Meanwhile, it should be noted that the fixed cost may further include costs other than the listed costs.

### (3) Description of variable cost calculation module and S1110 through S1130

The variable cost calculation module 142 is configured to calculate a variable cost. The variable cost includes the sum of the target product cost, the steam cost, and a cleaning cost for facility.

The target product cost is calculated by dividing a value, which is obtained by multiplying the mass of the target material by the unit price of the target material, by a recovery rate of the target material. In this case, the recovery rate of the target material may be calculated from the flow rate of the feed for the first skid in zone 1 and the flow rate of permeate for a last skid in zone 3. That is, the target product cost may be found from the skid model.

The steam cost is calculated by dividing the mass of a diafiltration buffer by steam economy (the mass capable of evaporating with steam of unit mass) and by multiplying the mass of the diafiltration buffer by a steam unit price. In this case, the mass of the diafiltration buffer may be calculated from the DF ratio.

In summary, the variable cost calculation module 142 calculates the variable cost by using the skid model, and the manufacturing cost model generation unit 14 may obtain a total manufacturing cost model by adding up the fixed cost input into the fixed cost input module 140 and the variable cost calculated by the variable cost calculation module 142.

Through the above-described configuration, according to an embodiment of the present disclosure, the manufacturing cost of the target product may be more accurately calculated.

### 2.4. Description of optimal condition calculation unit

### (1) Configuration of optimal condition calculation unit

Referring to FIG. 3, the optimal condition calculation unit 16 is configured to calculate optimal conditions by using the skid model generated by the skid model generation unit 12 and the manufacturing cost model generated by the manufacturing cost model generation unit 14. In this case, to calculate the optimal conditions, the optimal condition calculation unit 16 may include an optimal TMP calculation module 160, an optimal skid number calculation module 162, and an optimal DF ratio calculation module 164.

### (2) Optimal condition calculation operation

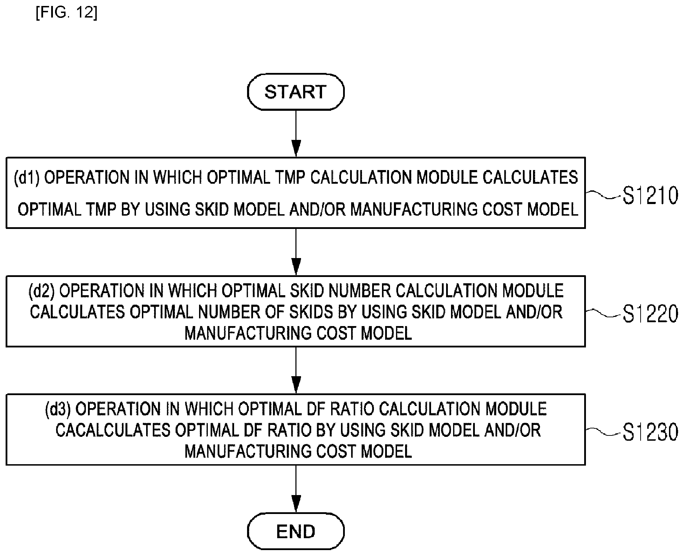

An optimal condition calculation operation will be described with reference to FIG. 12.

The optimal TMP calculation module 160 calculates optimal TMP by using one or more of the skid model and the manufacturing cost model (S1210).

The optimal skid number calculation module 162 calculates an optimal skid number by using one or more of the skid model and the manufacturing cost model (S1220).

The optimal DF ratio calculation module 164 calculates an optimal DF ratio by using one or more of the skid model and the manufacturing cost model (S1230).

Hereinafter, each module and operations S1210 through S1230 will be described in more detail.

### (3) Description of optimal TMP calculation module and S1210

As described above, permeation velocity in all zones 1, 2, 3 is dependent on TMP. Thus, the permeation velocity model may be changed by varying the TMP, thereby changing the skid model and the manufacturing cost. In this case, the number of skids N_{Z1}, N_{Z2}, N_{Z3} in each of zones 1, 2, 3, and the DF ratio are fixed.

The optimal TMP calculation module 160 is configured to calculate optimal TMP. To this end, the optimal TMP calculation module 160 uses a minimum value of TMP (e.g., 0.5 bar), a maximum value of TMP (e.g., 2 bar), and the number of divisions (e.g., 5). The manufacturing cost is calculated for the case where TMP increases by the value (maximum value - minimum value)/the number of divisions from the minimum value to the maximum value.

When applied to the above-described example, the optimal TMP calculation module 160 may calculate the manufacturing cost in each TMP value by substituting the changing TMP values (i.e., 0.5 bar, 0.8 bar, 1.1 bar, 1.4 bar, 1.7 bar, and 2.0 bar), a predetermined number of skids N_{Z1}, N_{Z2}, N_{Z3} and the DF ratio into the skid model generation unit 12 and the manufacturing cost model generation unit 14.

### (4) Description of optimal skid number calculation module and S1220

The skid model varies depending on the number of skids N_{Z1}, N_{Z2}, N_{Z3} in each of zones 1, 2, 3. Thus, the skid model is changed by varying the number of skids N_{Z1}, N_{Z2}, N_{Z3} in each of zones 1, 2, 3, and thus, the manufacturing cost changes. In this case, TMP and the DF ratio are fixed.

The optimal skid number calculation module 162 is configured to calculate an optimal number of skids N_{Z1}, N_{Z2}, N_{Z3}. To this end, the optimal skid number calculation module 162 sets a minimum value and a maximum value of the number of skids N_{Z1} in zone 1, and calculates the manufacturing cost for the case where the number of skids N_{Z1} in zone 1 increases by one from the minimum value to the maximum value.

In addition, the optimal skid number calculation module 162 sets a minimum value and a maximum value of the number of skids N_{Z2} in zone 2, and calculates the manufacturing cost for the case where the number of skids N_{Z2} in zone 2 increases by one from the minimum value to the maximum value.

Furthermore, the optimal skid number calculation module 162 sets a minimum value and a maximum value of the number of skids N_{Z3} in zone 3, and calculates the manufacturing cost for the case where the number of skids N_{Z3} in zone 3 increases by one from the minimum value to the maximum value.

Meanwhile, the value of N_{Z1} + N_{Z2} + N_{Z3} is constant. That is, while fixing the total number of skids, the optimal manufacturing cost is found by varying the number of skids N_{Z1}, N_{Z2}, N_{Z3} in each of zones 1, 2, 3.

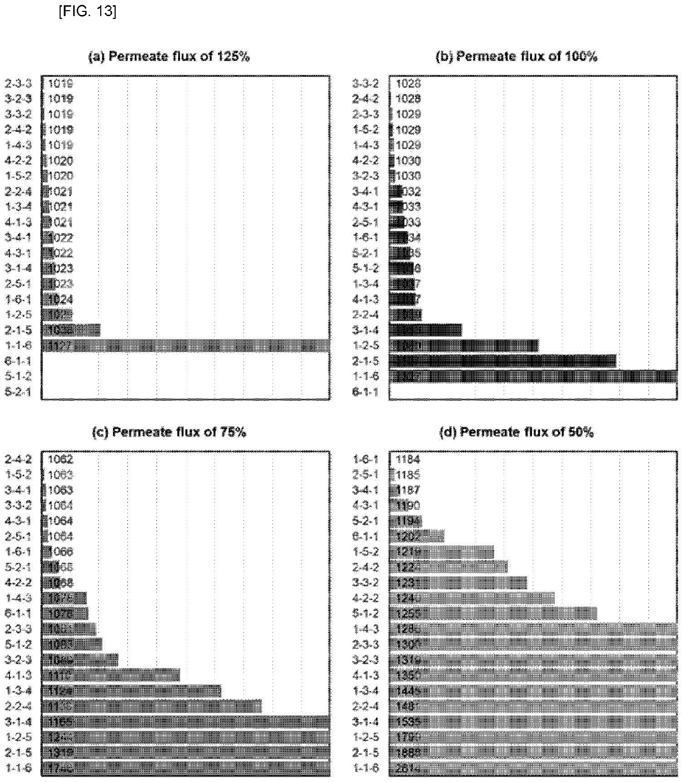

The results of calculating the optimal number of skids N_{Z1}, N_{Z2}, N_{Z3} by using the optimal skid number calculation module 162 according to an embodiment of the present disclosure are shown in FIG. 13. Specifically, FIG. 8 shows the manufacturing cost in the skid model that models the membrane separation process of the fermented liquid including lysine.

In this case, the conditions considered are as follows.
- Volumetric flow rate of the initial feed: 40 kl/hr, Lysine unit price: 1000 USD/ton, Steam unit price: 30 USD/ton
- The total number of skids is fixed at 8
- The membrane area of all skids is 200 m²
- Calculation of the manufacturing cost for the case where the weights of the regression model (i.e., the permeation velocity model) of permeation velocity changes according to VCF F_{C} are 125%, 100%, 75%, and 50%, respectively

Meanwhile, the reason for varying the weights of the permeation velocity model among the considered conditions is to consider all possible scenarios that may occur in actual situations including the case where the properties of the fermented liquid
change depending on fermentation process results, even when the same product is
produced, the case where the product being produced changes, and the case where
raw/auxiliary materials change, and the case where changes occur in the membrane.

(a) of FIG. 13 shows the manufacturing cost depending on the number of skids N_{Z1}, N_{Z2}, N_{Z3} in each of zones 1, 2, 3 when the weight of the permeation velocity model is 125%.

(b) of FIG. 13 shows the manufacturing cost depending on the number of skids N_{Z1}, N_{Z2}, N_{Z3} in each of zones 1, 2, 3 when the weight of the permeation velocity model is 100%, (c) of FIG. 13 shows the manufacturing cost depending on the number of skids N_{Z1}, N_{Z2}, N_{Z3} in each of zones 1, 2, 3 when the weight of the permeation velocity model is 75%, and (d) of FIG. 13 shows the manufacturing cost depending on the number of skids N_{Z1}, N_{Z2}, N_{Z3} in each of zones 1, 2, 3 when the weight of the permeation velocity model is 50%.

Referring to FIG. 13, the optimal number of skids N_{Z1}, N_{Z2}, N_{Z3} were 2-2-3, 3-3-2, 2-4-2, and 1-6-1 when the weights of the permeation velocity model are 125%, 100%, 75%, and 50%, respectively. The costs in this case were 1019 USD/ton, 1028 USD/ton, 1062 USD/ton, and 1184 USD/ton, respectively. Thus, it may be seen that a membrane separation process in which the situation where the permeation velocity of the fermented liquid changes may be reconfigured, is economically effective.

### (5) Description of optimal DF ratio calculation module and S1230

The DF ratio refers to the ratio of a dilution factor (DF), which means the mass ratio of water used for dilution of the fermented liquid relative to the fermented liquid. As described above, the permeation velocity *Jᵢ* of the permeate in zone 2 and zone 3 is affected by both the VCF and the dilution factor F_{D}. Thus, the skid model may be varied depending on the ratio of the dilution factor. Thus, the skid model changes by varying the DF ratio, and thus the manufacturing cost changes. In this case, TMP and the number of skids N_{Z1}, N_{Z2}, N_{Z3} in each of zones 1, 2, 3 are fixed.

The optimal DF ratio calculation module 164 is configured to calculate the optimal DF ratio. To this end, the optimal DF ratio calculation module 164 uses the minimum value (e.g., 10%), the maximum value (e.g., 60%) of the DF ratio, and the number of divisions (e.g., 6). The optimal DF ratio calculation module 164 calculates the manufacturing cost for the case where the DF ratio increases by the value (maximum value-minimum value)/the number of divisions from the minimum value to the maximum value.

When applied to the above-described example, the optimal DF ratio calculation module 164 may calculate the manufacturing cost in each DF ratio by substituting the values of the changing DF ratio (i.e., 10%, 20%, 30%, 40%, 50%, and 60%), the predetermined number of skids N_{Z1}, N_{Z2}, N_{Z3}, and TMP into the skid model generation unit 12 and the manufacturing cost model generation unit 14.

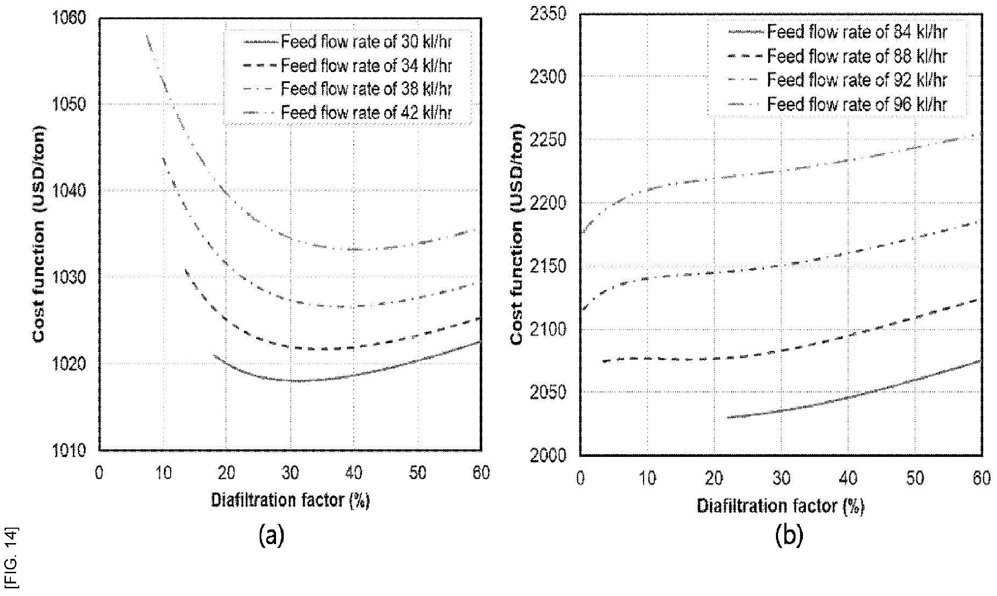

The results of calculating the optimal DF ratio by using the optimal DF ratio calculation module 164 according to an embodiment of the present disclosure are shown in FIG. 14.

Specifically, (a) of FIG. 14 shows the manufacturing cost in the skid model that models the membrane separation process of the fermented liquid including lysine.

In this case, the conditions considered are as follows.
- The number of skids N_{Z1} in zone 1 is 4, the number of skids N_{Z2} in zone 2 is 2, and the number of skids N_{Z3} in zone 3 is 2
- The membrane area of all skids is 200 m²
- The unit price of lysine is 1000 USD/ton, the unit price of steam is 30 USD/ton, steam economy was 5, and the maximum allowable VCF was 8
- Calculation of the manufacturing cost for the case where the volumetric flow rate of the fermented liquid including lysine is 30 kl/hr, 34 kl/hr, 38 kl/hr, and 42 kl/hr, respectively

Referring to (a) of FIG. 14, when the initial volumetric flow rates were 30 kl/hr, 34 kl/hr, 38 kl/hr, and 42 kl/hr, respectively, the optimal DF ratios were 31%, 35%, 38%, and 41%, respectively. The manufacturing cost in this case were 1018 USD/ton, 1022 USD/ton, 1027 USD/ton, and 1033 USD/ton, respectively.

(b) of FIG. 14 shows the manufacturing cost in the skid model that models the membrane separation process of the fermented liquid including arginine.

In this case, the conditions considered are as follows.
- The number of skids N_{Z1} in zone 1 is 1, the number of skids N_{Z2} in zone 2 is 6, and the number of skids N_{Z3} in zone 3 is 1
- The membrane area of all skids is 200 m²
- The unit price of arginine is 2000 USD/ton, the unit price of steam is 30 USD/ton, steam economy was 5, and the maximum allowable VCF was 15
- Calculation of the manufacturing cost for the case where the volumetric flow rate of the fermented liquid including arginine is 84 kl/hr, 88 kl/hr, 92 kl/hr, and 96 kl/hr, respectively

Referring to (b) of FIG. 14, it can be seen that the fermented liquid including arginine does not have an optimal cost at a specific DF ratio, unlike in the skid model using the fermented liquid including lysine. As can be seen in FIG. 5, the permeation velocity of the fermented liquid including arginine is greater than the permeation velocity of the fermented liquid including lysine. As a result, it may be interpreted that minimizing the DF ratio and operating the membrane separation process until the membrane is clogged, is optimal.

When the volumetric flow rates of the initial feed were 84 kl/hr, 88 kl/hr, 92 kl/hr, and 96 kl/hr, respectively, the optimal DF ratios were 22%, 3.4%, 0%, and 0%, respectively. The manufacturing cost in this case were 2030 USD/ton, 2074 USD/ton, 2116 USD/ton, and 2177 USD/ton, respectively.

As described above, the membrane separation process design system 1 according to an embodiment of the present disclosure models a permeation velocity model representing the permeation velocity in each zone by collecting data, generates a skid model by using the permeation velocity model, and calculates the manufacturing cost by using the generated skid model. In this case, the optimal conditions (optimal TMP, the optimal number of skids, optimal DF ratio) are calculated by varying TMP, the number of skids N_{Z1}, N_{Z2}, N_{Z3} in each of zones 1, 2, 3, and the DF ratio that affect the skid model, thereby determining the lowest manufacturing cost.

The above description merely exemplifies the technic al concept of the present embodiment, and those skilled in the art to which the present embodiment pertains will recognize that various modifications and variations are possible without departing from the essential characteristics of the present embodiment. Thus, the present embodiments are intended to illustrate the technical spirit of the present embodiments, and the scope of the technical spirit of the present embodiment is not limited by these embodiments. The scope of protection of the present embodiments should be interpreted by the following claims, and all technical concepts within the equivalent scope should be interpreted as falling within the scope of rights of the present embodiments.

### (Explanation of reference numerals designating the major elements of the drawings)

1: membrane separation process design system
10: permeation velocity model generation unit
100: data collection module
102: parameter fitting module
12: skid model generation unit
120: initial condition input module
122: mass balance calculation module
14: manufacturing cost model generation unit
140: fixed cost input module
142: variable cost calculation module
16: optimal condition calculation unit
160: optimal TMP calculation module
162: optimal skid number calculation module
164: optimal DF ratio calculation module

## Claims

1. A method for calculating optimal design conditions of a continuous membrane separation process including a plurality of zones, each zone including one or more skids, the method comprising:
(A) an operation in which a permeation velocity model generation unit generates a permeation velocity model for modeling permeation velocity *J* in each zone;
(B) an operation in which a skid model generation unit generates a skid model for modeling mass balance in each zone by using the permeation velocity model;
(C) an operation in which a manufacturing cost model generation unit generates a manufacturing cost model for modeling a manufacturing cost required to manufacture a target product by using the skid model; and
(D) an operation in which an optimal condition calculation unit calculates optimal design conditions by using one or more of the permeation velocity model, the skid model, and the manufacturing cost model.

2. The method of claim 1, wherein the plurality of zones comprise a first zone that is a permeate zone, a second zone that is a permeate recycle zone, and a third zone that is a diafiltration zone, and the optimal condition calculation unit calculates optimal design conditions by varying transmembrane pressure (TMP), a number of skids N_{Z1} arranged in the first zone, a number of skids N_{Z2} arranged in the second zone, a number of skids N_{Z3} arranged in the third zone, and a dilution factor (DF) ratio, and the DF ratio is a mass ratio of water used in the diafiltration zone relative to fermented liquid.

3. The method of claim 2, wherein permeation velocity *J* in the first zone is determined by a volumetric concentration factor (VCF) F_{C} and the TMP, permeation velocity *J* in the second zone and permeation velocity *J* in the third zone are determined by the VCF F_{C}, the TMP, and a dilution factor F_{D}, and the operation (A) comprises:
(a1) an operation in which a data collection module of the permeation velocity model generation unit receives experimental results comprising permeation velocity *J* in the first zone, the VCF F_{C} and the TMP, permeation velocity *J* in the second zone, the VCF F_{C} and the TMP, and permeation velocity *J* in the third zone, the VCF F_{C} and the TMP; and
(a2) an operation in which a parameter fitting module of the permeation velocity model generation unit models a permeation velocity model representing a relationship between permeation velocity *J* in the first zone and the VCF F_{C}, a permeation velocity model representing a relationship between permeation velocity *J* in the second zone and in the third zone and the VCF F_{C}, and a permeation velocity model representing a relationship between permeation velocity *J* and the dilution factor F_{D}.

4. The method of claim 3, wherein the operation (B) comprises:
(b1) an operation in which an initial condition input module of the skid model generation unit receives initial conditions including a volumetric flow rate (*V̇*_{*F*,1}), a target product mass flow rate (*Ṁ*_{*X*,*F*,1}), and a biomass mass flow rate (*Ṁ*_{*S,F*,1}) of a feed for a first skid in the first zone;
(b2) an operation in which a mass balance calculation module of the skid model generation unit calculates mass balance in the first zone by using a preset method using the permeation velocity model in the first zone and the initial conditions;
(b3) an operation in which the mass balance calculation module of the skid model generation unit calculates mass balance in the second zone by using a preset method using the permeation velocity model in the second zone and the mass balance in the first zone; and
(b4) an operation in which the mass balance calculation module of the skid model generation unit calculates mass balance in the third zone by using a preset method using the permeation velocity model in the third zone and the mass balance in the second zone.

5. The method of claim 4, wherein the operation (C) comprises:
(c1) an operation in which a fixed cost input module of the manufacturing cost model generation unit receives a fixed cost;
(c2) an operation in which a variable cost calculation module of the manufacturing cost model generation unit calculates a target product cost;
(c3) an operation in which the variable cost calculation module of the manufacturing cost model generation unit calculates a steam cost; and
(c4) an operation in which the manufacturing cost model generation unit generates a manufacturing cost model by using the costs calculated in the operations (c1) through (c3), and
the fixed cost comprises an installation cost, depreciation, a labor cost, and the variable cost comprises a target product cost and a steam cost, and the target product cost is calculated by a preset method using a feed flow rate of a first skid in the first zone and a flow rate of a last skid in the third zone, and the steam cost is calculated by a preset method using the DF ratio.

6. The method of claim 2, wherein the operation (D) comprises:
(d1) an operation in which an optimal TMP calculation module of the optimal condition calculation unit calculates optimal TMP at which the manufacturing cost is minimum, by using the skid model and the manufacturing cost model;
(d2) an operation in which an optimal skid number calculation module of theoptimal condition calculation unit calculates an optimal number of skids at which the manufacturing cost is minimum, by using the skid model and the manufacturing cost model; and
(d3) an operation in which an optimal DF ratio calculation module of the optimal condition calculation unit calculates an optimal DF ratio at which the manufacturing cost is minimum, by using the skid model and the manufacturing cost model.

7. A system for calculating optimal design conditions of a continuous membrane separation process including a plurality of zones, each zone including one or more skids, the system comprising:
a permeation velocity model generation unit for modeling permeation velocity in each zone;
a skid model generation unit for generating a skid model by calculating mass balance of the continuous membrane separation process by using a permeation velocity model modeled by the permeation velocity model generation unit;
a manufacturing cost model generation unit for generating a manufacturing cost model by calculating a manufacturing cost required to manufacture a target product by using the skid model; and
an optimal condition calculation unit for calculating optimal conditions by using the permeation velocity model, the skid model, and the manufacturing cost model.

8. The system of claim 7, wherein the plurality of zones comprise a first zone that is a permeate zone, a second zone that is a permeate recycle zone, and a third zone that is a diafiltration zone, and the optimal condition calculation unit calculates optimal design conditions by varying transmembrane pressure (TMP), a number of skids N_{Z1} arranged in the first zone, a number of skids N_{Z2} arranged in the second zone, a number of skids N_{Z3} arranged in the third zone, and a dilution factor (DF) ratio, and the DF ratio is a mass ratio of water used in the diafiltration zone relative to fermented liquid.

9. The system of claim 8, wherein permeation velocity *J* in the first zone is determined by a volumetric concentration factor (VCF) F_{C} and the TMP, and permeation velocity *J* in the second zone and permeation velocity *J* in the third zone are determined by the VCF F_{C}, the TMP, and a dilution factor F_{D}, and
the permeation velocity model generation unit comprises:
a data collection module that receives experimental results comprising permeation velocity *J* in the first zone, the VCF F_{C} and the TMP, permeation velocity *J* in the second zone, the VCF F_{C} and the TMP, and permeation velocity *J* in the third zone, the VCF F_{C} and the TMP; and
a parameter fitting module that models a permeation velocity model representing a relationship between permeation velocity *J* in the first zone and the VCF F_{C}, a permeation velocity model representing a relationship between permeation velocity *J* in the second zone and in the third zone and the VCF F_{C}, and a permeation velocity model representing a relationship between permeation velocity *J* and the dilution factor F_{D}.

10. The system of claim 8, wherein the skid model generation unit comprises:
an initial condition input module that receives initial conditions including a volumetric flow rate (*V̇*_{*F*,1}), a target product mass flow rate (*Ṁ*_{*X*,*F*,1}), and a biomass mass flow rate (*Ṁ*_{*S,F*,1}) of a feed for a first skid in the first zone; and
a mass balance calculation module that calculates mass balance in the first zone by using a preset method using the permeation velocity model in the first zone and the initial conditions, calculates mass balance in the second zone by using a preset method using the permeation velocity model in the second zone and the mass balance in the first zone, and calculates mass balance in the third zone by using a preset method using the permeation velocity model in the third zone and the mass balance in the second zone.

11. The system of claim 8, wherein the manufacturing cost model generation unit comprises:
a fixed cost input module that receives a fixed cost; and
a variable cost calculation module that calculates a target product cost, and
the fixed cost comprises an installation cost, depreciation, a labor cost, and the variable cost comprises a target product cost and a steam cost, and the target product cost is calculated by a preset method using a feed flow rate of a first skid in the first zone and a flow rate of a last skid in the third zone, and the steam cost is calculated by a preset method using the DF ratio.

12. A system for modeling a continuous membrane separation process, the continuous membrane separation process including a first zone that is a permeate zone and includes N_{Z1} skids, a second zone that is a permeate recycle zone and N_{Z2} skids, and a second zone that is a diafiltration zone and N₂₃ skids, the system calculating mass blalance in the first zone, wherein the mass balance in the first zone is calculated by repeatedly calculating a solution to [Equation 1] through [Equation 9] for i (where 1≤i≤N_{Z1}), ${\dot{V}}_{F , i} = {\dot{V}}_{R , i - 1}$ ${\dot{M}}_{X , F , i} = {\dot{M}}_{X , R , i - 1}$ ${\dot{M}}_{S , F , i} = {\dot{M}}_{S , R , i - 1}$ ${\dot{V}}_{P , i} = {\dot{V}}_{F , i} - {\dot{V}}_{R , i}$ ${F}_{C , i} = {\dot{V}}_{F , i} / {\dot{V}}_{R , i}$ ${\dot{V}}_{P , i} = {J}_{i} \left({F}_{C , i}\right) \times {A}_{i}$ ${\dot{M}}_{X , R , i} = {\dot{V}}_{P , i} {\dot{M}}_{X , F , i} / \left({\dot{V}}_{F , i}-{\dot{M}}_{S , F , i}\right)$ ${\dot{M}}_{X , P , i} = {\dot{M}}_{X , F , i} - {\dot{M}}_{X , R , i}$ ${\dot{M}}_{S , R , i} = {\dot{M}}_{S , F , i}$ , where *V̇_{F,i}* is a volumetric flow rate of a feed for an i-th skid, *V̇_{R,i}* is a volumetric flow rate of a retentate for the i-th skid, *V̇_{P,i}* is a volumetric flow rate of permeate for the i-th kid, *Ṁ_{X,F,i}* is a mass flow rate of a target product in the feed for the i-th skid, *Ṁ_{X,R,i}* is a mass flow rate of a target product in the retentate for the i-th skid, is a mass flow rate of a target product in an i-th permeate, *Ṁ_{S,F,i}* is a mass flow rate of biomass in the feed for the i-th skid, *Ṁ_{S,R,i}* is a mass flow rate of the biomass in the retentate for the i-th skid, is a mass flow rate of the biomass in the permeate for the i-th skid, *F_{C,i}* is a volumetric concentration factor of the i-th skid, *Jᵢ* is permeation velocity of the permeate for the i-th skid, and *Aᵢ* is a membrane area of the i-th skid.

13. The system of claim 12, wherein the system calculates mass blalance in the second zone, wherein the mass balance in the second zone is calculated by repeatedly calculating a solution to [Equation 4], [Equation 5], and [Equation 10] through [Equation 16] for i (where 1≤i≤N_{Z2}), $\begin{matrix}{\dot{V}}_{F , i} = {\dot{V}}_{R , i - 1} - {\dot{V}}_{RP} / {N}_{Z 2} \\ {\dot{M}}_{X , F , i} = {\dot{M}}_{X , R , i - 1} + {\dot{M}}_{X , RP} / {N}_{Z 2}\end{matrix}$ ${\dot{M}}_{S , F , i} = {\dot{M}}_{S , R , i - 1}$ ${\dot{M}}_{X , P , i} = {\dot{V}}_{P , i} {\dot{M}}_{X , F , i} / \left({\dot{V}}_{F , i}-{\dot{M}}_{S , F , i}\right)$ ${\dot{M}}_{S , R , i} = {\dot{M}}_{S , F , i}$ ${F}_{D , i} = 1 - \frac{{\dot{M}}_{X , R , i} / \left({\dot{V}}_{R , i}-{\dot{M}}_{S , R , i}\right)}{{\dot{M}}_{X , F , 1} / \left({\dot{V}}_{F , 1}-{\dot{M}}_{S , F , 1}\right)}$ ${\dot{V}}_{P , i} = {J}_{i} \left({F}_{C , i}, {F}_{D , i}\right) \times {A}_{i}$ , where *V̇_{RP}* is a volumetric flow rate of recycle permeate in a third zone, *Ṁ_{X,RP}* is a mass flow rate of a target product included in the recycle permeate mixed into the feed in the second zone, and *F_{D,i}* is a dilution factor for the i-th skid.

14. The sytem of claim 13, wherein the system calculates mass blalance in the third zone, wherein the mass balance in the third zone is calculated by repeatedly calculating a solution to [Equation 4] and [Equation 13] through [Equation 19] for i (where 1≤i≤N_{Z3}), ${\dot{V}}_{F , i} = {\dot{V}}_{R , i - 1} + {\dot{V}}_{DF} / {N}_{Z 3}$ ${\dot{M}}_{X , F , i} = {\dot{M}}_{X , R , i - 1}$ ${\dot{M}}_{S , F , i} = {\dot{M}}_{S , R , i - 1}$ , where is a volumetric flow rate of a buffer in the third zone.
